Europäisches Patentamt

European Patent Office

Office européen des brevets

(19)

(11) Publication number: **0 097 631**

**A2**

(12) **EUROPEAN PATENT APPLICATION**

(21) Application number: **83850160.9**

(22) Date of filing: **09.06.83**

(51) Int. Cl.³: **F 23 J 15/00**
F 23 C 3/00, B 01 D 53/34
B 01 D 46/30, B 01 D 46/10
F 28 D 21/00

(30) Priority: **17.06.82 SE 8203757**

(43) Date of publication of application:
**04.01.84 Bulletin 84/1**

(84) Designated Contracting States:
**AT CH DE LI NL SE**

(71) Applicant: **Johansson, Ulf**
**Sjunde Villagatan 25**
**S-502 44 Borås(SE)**

(72) Inventor: **Johansson, Ulf**
**Sjunde Villagatan 25**
**S-502 44 Borås(SE)**

(74) Representative: **MacFie, W.R. et al,**
**Backers Patentbyra AB Drottninggatan 15**
**S-41114 Göteborg(SE)**

(54) A method and a device for burning fluid fuel.

(57) In order to obtain a favourable combustion, including an efficient destruction of soot, neutralization of acid combustion residues and recovery of residual heat, the flame from an oil burner (53) is directed axially into a tube (52) of refractory material. At the exit from the tube there is a porous slab (54) of refractory material which, in use, is maintained in incandescent state, so soot will be consumed.

The soot-free combustion gases are transferred into a column (60) in the upper portion of which a neutralizing agent containing fluid is sprayed through a nozzle (65). The fluid is collected in the lower portion (79) of the column for recirculation to the nozzle (65) by means of a pump (63). The neutralizing agent is added by means of a metering device (67), and a heat recovering coil (70) is provided in the fluid containing, lower portion (62) of the column.

FIG. 2

P 7163EPC/McF/Ah

07.06.1983

Ulf Johansson

## A METHOD AND A DEVICE  FOR BURNING FLUID FUEL.

The combustion gases from a furnace where fluid fuel is burnt should have a certain temperature in order to prevent condensation upon the heat exchanging surfaces. This means a considerable heat-loss, and the gases will contain sulphur compounds, which may damage the flue structure and also means a general environmental trouble. The starting of a burner in a cold combustion chamber, as well as a erroneous adjustment of the burner, will cause the generation of soot.

The aim of the present invention is to propose a device, which is especially suited for the burning of oil in furnaces of a size common in domestic boilers, and which makes it possible to neutralize acid constituents in the gases, as well as efficiently to recover residual heat.

A method according to the invention is characterized in passing the combustion gases through a chamber containing bodies of refractory material offering a large contact surface to the gases.

In order to neutralize the combustion gases and to recover residual heat the gases are, downstream of the chamber, passed through a second chamber, in which a neutralizing agent containing fluid is sprayed, collected and recirculated, after heat absorbed by the fluid having been recovered.

A device according to the invention is characterized in a chamber located adjacent to a burner and arranged to be passed through by the combustion gases and where the gases are brought into contact with bodies of refractory material offering a large contact surface to the gases.

The chamber is preferably formed as a hopper containing a plurality of individual bodies.

Alternatively the chamber may include a cylindrical tube of refractory material, the bodies being located adjacent to the gas exit therefrom.

In order to facilitate the mounting of the tube in an existing boiler the tube is preferably divided longitudinally, in at least two parts. The bodies may be formed into a slab, insertable in the tube exit end.

In order to neutralize the acid constituents in the combustion gase and to recover residual heat a second chamber is advantageously located downstream of the first mentioned chamber and is provided with means for spraying a neutralizing agent containing fluid in the path of the combustion gases, and forming part of a column in the lower portion of which the fluid is collected for recirculation and recovery of heat absorbed by the fluid.

The second chamber may contain a plurality of individual bodies to be sprayed by the fluid.

For draining fluid from the lower portion of the column a conduit is provided, which from the lower portion of the column extends vertically upwards, and, at a highest permissible fluid level in the fluid collecting portion of the column is terminated by a $360^{\circ}$ loop having a downwardly directed discharge.

The invention will below be described with reference to the accompanying drawings, in which

Figure 1 shows a first embodiment of a device for burning fluid fuel, where the combustion gases are treated according to the invention,

Figure 2 shows a second embodiment of a device according to the invention,

Figure 3 shows a detail of part of the combustion chamber in Figure 2,

Figures 4 and 5 show cross sections through various designs of combustion chambers,

Figure 6 shows a modified embodiment of a combustion chamber, and

Figures 7 - 9 show details of further modified designs of the combustion chamber.

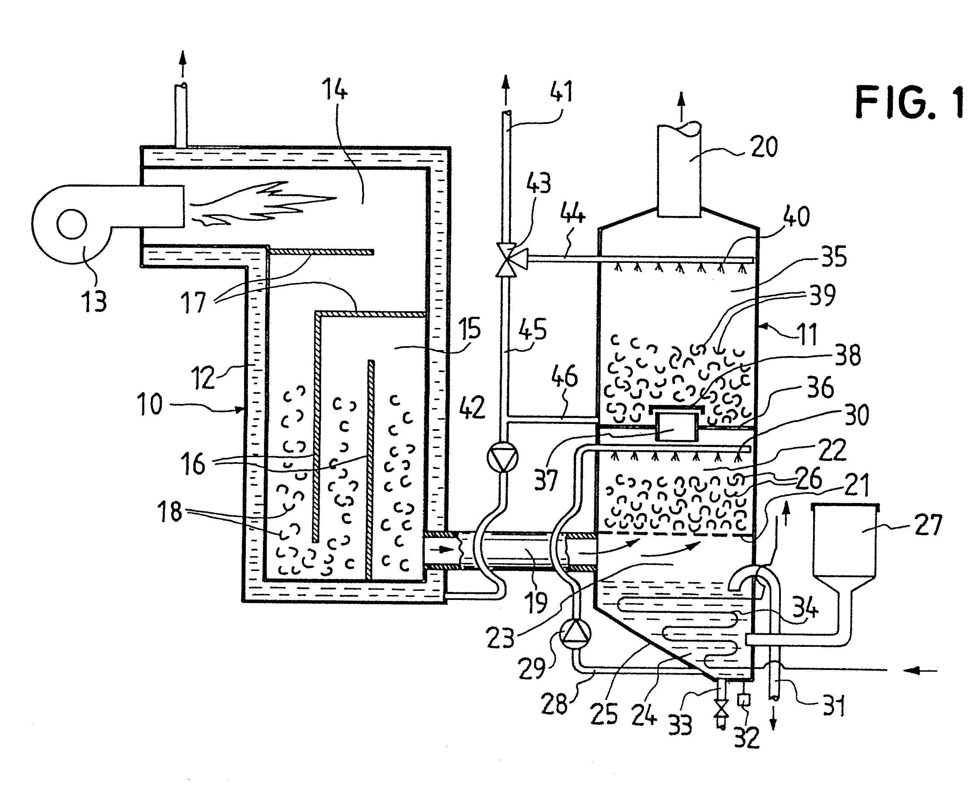

The combustion device shown in Figure 1 includes a combustion part 10 and a column shaped part 11. The combustion part comprises two portions arranged perpendicularly to each other and is enclosed in a water casing 12. An oil
burner 13 is mounted horizontally in the upper combustion
portion and a combustion space 14 extends above the vertical portion 15 of the combustion part. The vertical portion
is subdivided by vertical and horizontal partitions 16, 17
so as to form an extended passage-way for the gases.

The vertical portion 15 forms a hopper, which is filled
with bodies 18 of refractory material, which are adapted to
offer large contact surface within a restricted space.

The combustion gas exit 19 connecting the combustion
part 10 with the column 11 issues from the lower portion of
the combustion part. Possible soot particles formed during
starting of the burner, or during occasional disturbances
of the operation thereof, are caught by the bodies 18 within the hopper 15. These bodies will be incandescent after a
short time of operation of the burner. The gases flowing
into the column 11 are thus practically free from soot.
Within the column acid residues in the gases are neutralized, and residual heat is recovered.

The combustion gases will flow into the column 11,
through conduit 19, which is connected to the lower portion
of the column and they will leave the latter through a connection 20 at the top thereof.

The column 11 is provided with a perforated partition
21, which subdivides its lower portion into two chambers 22
and 23. The lower chamber 23 is formed as a fluid collecting pan 24, which is defined by an oblique side wall 25.
The perforated partition 21 is located just above the entrance of the combustion gas conduit 19, and it carries a
plurality of bodies 26 of refractory material, which substantially fill the chamber 22, above the partition 21.

The combustion gases passing through chamber 22 are
washed with a continueously circulated fluid, which
contains chemical agents adapted to neutralize the acid
sulphur constituents in the gases.

A suitable agent is magnesium oxid (MgO). It is difficult to dissolve this compound in water, but it has a high
density, which makes it easy to separate the neutralization

4

fluid from the addition of condensate which has to be accepted.

A satisfactory dissolving of magnesium oxide will occur in hot water, and the fluid will, in use, be maintained at an elevated temperature. A solution containing magnesium oxide is stored in a container 27, and is metered into the pan 24 by suitable means.

The neutralizing fluid is circulated by way of a conduit 28 and a pump 29 to the upper part of chamber 22, where it is sprayed through nozzles 30 over the bodies 26.

The combustion gases pass upwards between the bodies, and are brought into intimate contact with the neutralizing fluid, which covers the surfaces of the bodies.

The fluid passing downwardly through the layer of bodies 26 drips down through the partition 21 and is collected in the pan 24, where the heavy magnesium oxide containing fluid sinks to the bottom. Possible addition of condensate will be collected in the upper part of the pan, and may be withdrawn through a conduit 31. This may be provided with a water trap (not shown) or some similar device determining the fluid level.

A sensor 32 indicates the concentration of MgO in the fluid, or the density thereof and ensures that the necessary quantity of neutralization agent is available. After some time the chemical compound will be consumed, and the fluid will then have to be drained from the pan by way of a conduit 33. Thereafter the pan is filled with fresh neutralizing fluid.

The combustion gases will contain a certain amount of heat. This residual heat is partly absorbed by the bodies 26 and partly directly by the circulating fluid and is then by the fluid transferred down into the pan 24. Within the latter a coil 34 is fitted for absorbing the heat, which may be used for heating tap water, or for other purposes.

Through the arrangement described a neutralization of the acid constituents in the gases is brought about, and furthermore a major part of the residual heat is recovered. The coil 34 is located in the neutralized fluid, and will not be subjected to corrosion attacks.

The addition of neutralizing agent may be arranged by means of devices of arbitrary, known type, and may possibly be arranged so the agent is sprayed directly upon the bodies 26.

The combustion gases may still contain some heat. A further chamber 35 is arranged on top of chamber 22, and is separated from the latter by a partition 36. This is provided with a pipe stub 37 serving as a weir and being covered by a lid 38.

The chamber 35 is filled with ceramic bodies 39, similar to those of chamber 16, and in the upper portion of the chamber there is a series of spraying nozzles 40.

A return flow pipe, for instance from a radiator circuit, is denoted by 41, and is connected to the water casing 12 in the combustion portion 10, and includes a circula- tion pump 42.

A three-way solenoid valve 43 is fitted in conduit 41, and is connected to a branch pipe 44, feeding the nozzles 40, as well as to a shunting pipe 45. A governor (not shown) actuates the valve 43 in consequence of the occasional operating condition of the burner 13, so the valve cuts off the nozzles 40 when the burner is not in action, but permits flow through pipe 45. When the burner is in action pipe 45 is cut off, and the radiator water is sprayed across the bodies 39, and will then absorb possible remaining heat in the gases.

With boilers where the invention mainly is to be used, the water pressure is not so high as to prevent an open spraying. A return flow pipe 46 is connected to the lower part of chamber 35, and as the main return flow pipe 45 is cut off the pump 42 will draw off the water having flown downwards along the bodies 39.

The governor for the valve may be adjusted so the operation of the valve is slightly off-set in relation to the burner, i.e. it opens up the connection to the nozzles 40 when combustion gases have passed the chamber for some time, but cuts off the nozzles some time after the burner has been cut off.

Possible moisture following the gases into chamber 35 will be condensed and the additonal water not taken care of by the pump 42 will flow over the upper edge of the stub pipe 37, serving as a weir, and passes through chamber 22 down into the pan 24, from which it in due course is drained by way of pipe 31.

Beside the environmental aspect, the lower temperature of the neutralized gases will be less detrimental to the material in the chimney. Other additions than MgO may of course be used as neutralizing agents.

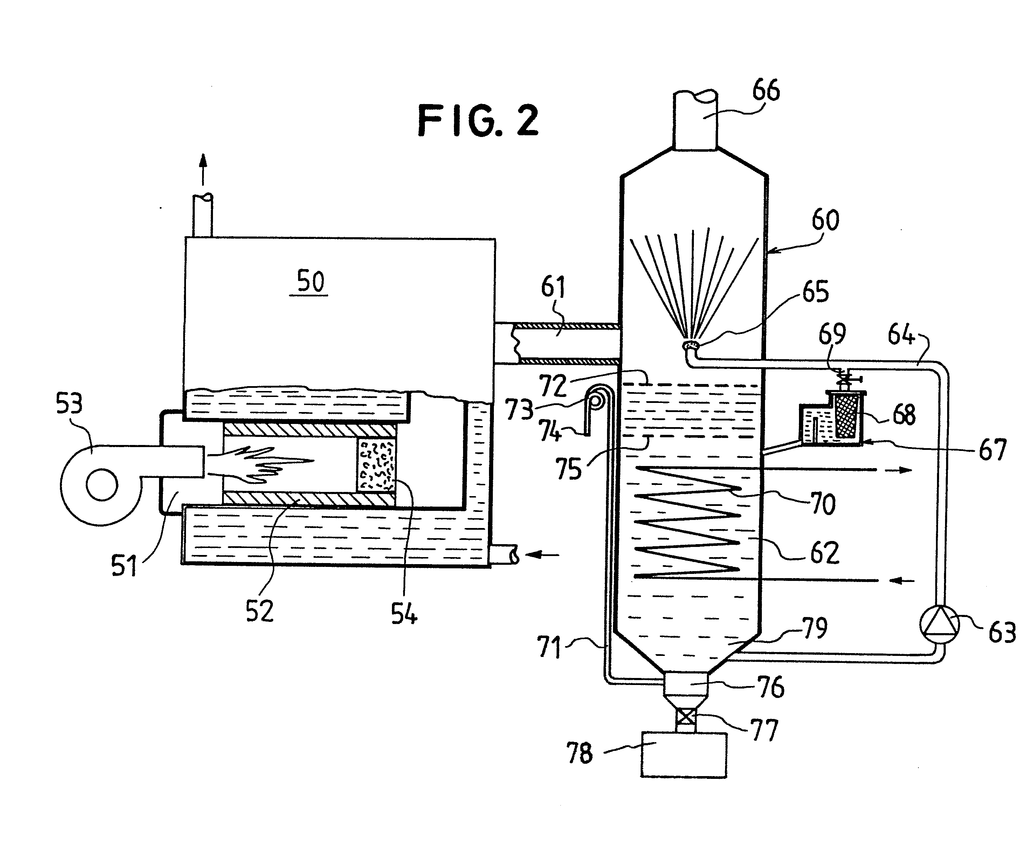

Figure 2 shows a second embodiment of a combustion device according to the invention.

Reference 50 denotes a domestic boiler of arbitrary known kind, into the furnace 51 of which a tubular member 52 of refractory material has been fitted in such a manner that the flame from an oil burner 53 will be directed axially thereinto.

A porous slab 54 is fitted in the exit end of the tube. This slab may be composed of the same type of bodies 18, which are provided as separate elements in the hopper 15 of Figure 1, but which here have been bound together to a porous slab with a diameter corresponding to the internal diameter of the tube 52.

The tube 52 will, in use, be maintained in incandescent state and the slab 54 will act in the same way as the bodies 18 in Figure 1, i.e. at operating temperature it will efficiently consume possible soot particles generated during start-up of the burner, or during occasional disturbances thereof.

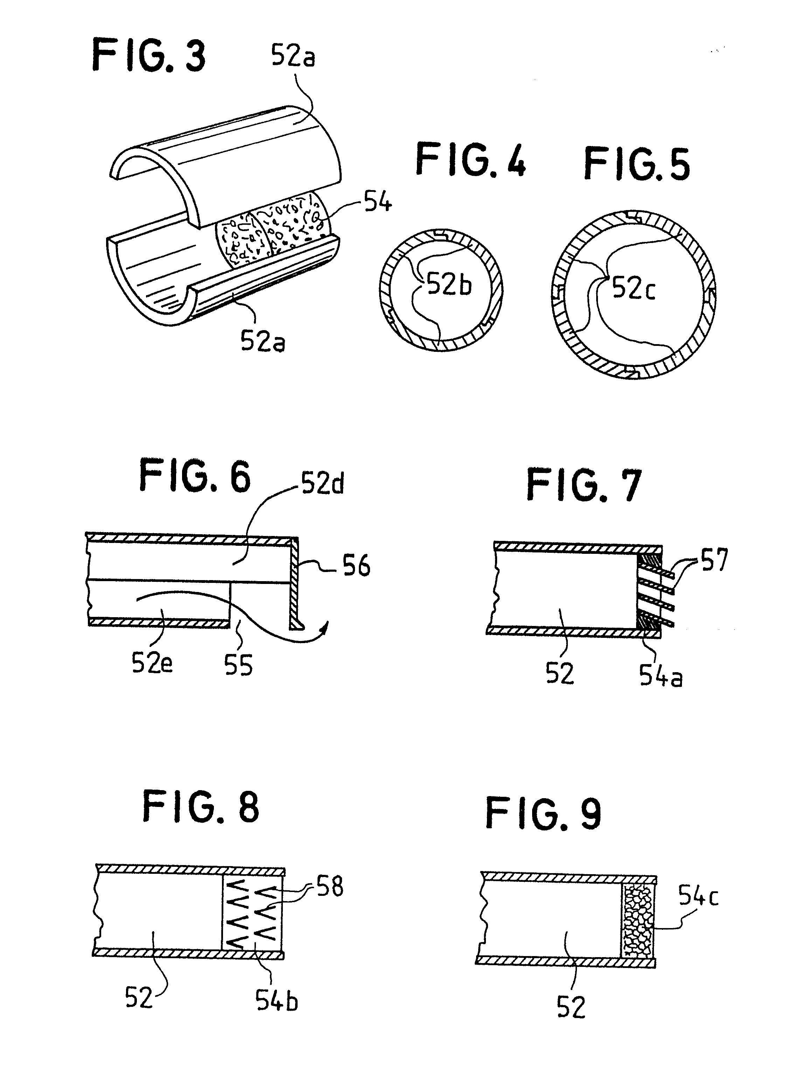

In order to facilitate the mounting of tubes in boilers. with narrow furnaces the tube 52 may be manufactured in two halves 52a, as illustrated in Figure 3. The halves being individually introduced into the furnace, and built together therein.

On certain occasions it may, as shown in Figure 4, be favourable to subdivide the tube into three equal parts 52b, and with very big tubes a subdivision into four parts 52c, as indicated in Figure 5 may be advantageous.

The tube 52, as well as the slab 54 may be formed in different ways in order to fit into furnaces of varying size and shape.

Figure 6 shows an embodiment, where the tube is composed of two halves 52d and 52e, of which the latter is shorter than the former, so a downwardly directed exit opening 55 is formed. The exit end of the tube is closed by a plate 56, which forces the gases to deviate downwardly, to pass out below its lower edge.

The embodiment according to Figure 7 shows a member 54a comprising obliquely disposed plates 57, which form a kind of grid.

According to Figure 8 the member 54b is formed by funnel shaped elements 58, which are cast together into a slab having a diameter suited to the internal diameter of tube 52. The elements 58 are positioned so the desired flow area is obtained, without any direct through passage. A forward funnel directs in other words the gas flow towards the envelope faces of following funnels.

According to Figure 9 member 54c in the exit end of tube 52 is formed as a mesh of ceramic fibers.

Also with the embodiment according to Figure 2 there is a means for neutralization of the combustion gases and for recovering residual heat.

The combustion gases are conveyed from the boiler 50 to a column 60 by way of a conduit 61. The chamber 62 below the connection of conduit 61 forms a recipient for neutralizing fluid. A pump 63 forces, by way of a pipe 64, fluid to a nozzle 65, which is located centrally in the column, above conduit 61. The nozzle is adapted to spray the fluid in the form of a hollow cone in the direction of flow of the gases on their way to an exit 66.

A neutralizing agent, for instance MgO, is added to the fluid in chamber 62 from a distributor 67. The agent is stored in a fine-mesh basket 68, and a certain amount of water is continuously drawn off from pipe 64 through a branch pipe 69, and is made to pass the distributor. Hereby a satisfactory quantity of the agent is dissolved and added to the fluid in chamber 62.

A coil 70 is located in chamber 62 to take care of the residual heat in the same manner as has been mentioned in connection with coil 34 i Figure 1.

Due to the cooling in the column the moisture content in the gases will condense, and will be added to the fluid in chamber 62. Part of the fluid must be drained off at intervals. A conduit 71 is connected to the lower end of chamber 62 and is brought upwards to a highest, desired fluid level 72 in the chamber. The end of the conduit is formed as a 360$^\circ$ loop 73 having a downwardly directed discharge 74.

When the fluid in the chamber 62 raises towards the highest level 72, the coresponding part of the conduit 71, with the loop 73 is also filled. When the loop is completely filled fluid is drained off until the level of the fluid has been reduced to the mouth of the discharge 74. This is indicated by level 75, where the draining is stopped. Condense water is continuously added, and the level 72 will be reached again, whereupon a further draining occurs.

Sludge formed during the neutralization is collected in a pocket 76 below the column 60, and may intermittently be drained off to a recipient 78 by way of a valve 77.

The embodiments above described and shown in the drawings are to be regarded as examples only of the invention, the details of which may be varied in many ways within the scope of the appended claims.

The tubes 52, as well as the inserts 54 may be modified in many ways, above those shown, and the column 60 need not be vertically placed, but can be mounted in an inclined flue passage. The spraying of fluid in the gas flow can be brought about by a number of nozzles arranged to distribute the fluid with, against or transversely to the direction of gas flow.

P 7163 EPC/McF/Ah
07.06.1983

## CLAIMS

1.    A method in burning fluid fuel, c h a r a c t e - r i z e d  in passing the combustion gases through a chamber (15, 52) containing bodies (18, 54) of refractory material offering a large contact surface to the gases.

2.    A method according to claim 1, c h a r a c t e - r i z e d  in that the gases, downstream of the chamber (15, 52) are passed through a second chamber (27, 62) in which a neutralizing agent containing fluid is sprayed, collected and recirculated, after heat absorbed by the fluid having been recovered.

3.    A device for burning fluid fuel, c h a r a c - t e .r i z e d  in a chamber (15, 52) located adjacent to a burner (15, 53) and arranged to be passed through by the combustion gases and where the gases are brought into contact with bodies (18, 54) of refractory material offering a large contact surface to the gases.

4.    A device according to claim 3, c h a r a c t e - r i z e d  in that the chamber (15) is formed as a hopper containing a plurality of individual bodies (18).

5.    A device according to claim 3, c h a r a c t e - r i z e d  in that the chamber (52) includes a cylindrical tube of refractory material, the bodies (54) being located adjacent to the gas exit therefrom.

6.    A device according to claim 5, c h a r a c t e - r i z e d  in that the tube (52) is divided longitudinally in at least two parts (52a-c).

7.    A device according to either of claims 5 or 6, c h a r a c t e r i z e d  in that the bodies (54) are formed into a slab, insertable in the tube exit end.

0097631

10

8. A device according to either of claims 3 - 7, c h a r a c t e r i z e d in a second chamber (22, 62) located downstream of the first mentioned chamber (15, 52) and provided with means for spraying a neutralizing agent containing fluid in the path of the combustion gases, and forming part of a column (11, 60) in the lower portion (24, 79) of which the fluid is collected for recirculation and recovery of heat absorbed by the fluid.

9. A device according to claim 8, c h a r a c t e - r i z e d in that the second chamber (22) contains a plurality of individual bodies (26) to be sprayed by the fluid.

10. A device according to either of claims 8 or 9, c h a r a c t e r i z e d in a conduit (71), which from the lower portion of the column extends vertically upwards, and, at a highest permissible fluid level (72) in the fluid collecting portion of the column is terminated by a $360^{\circ}$ loop (73) having a downwardly directed discharge (74) for an intermittent draining of condensate.

**FIG. 1**

FIG. 2

# FIG. 3

52a

54

52a

# FIG. 4

52b

# FIG. 5

52c

# FIG. 6

52d

56

52e    55

# FIG. 7

57

52    54a

# FIG. 8

58

52    54b

# FIG. 9

54c

52